# EUROPÄISCHE PATENTSCHRIFT

(11) **EP 1 084 907 B1**
(45) Veröffentlichungstag und Bekanntmachung des Hinweises auf die Patenterteilung: **15.10.2003**
(21) Anmeldenummer: 00117360.8
(22) Anmeldetag: 23.08.2000
(51) Int. Cl.: B60R 5/04

(54) **Schutzvorrichtung für einen Innenraum eines Kraftfahrzeuges**
Protection device for the interior of a vehicle
Dispositif de protection pour l'habitacle d'un véhicule

(30) Priorität: 20.09.1999 DE 19944948
(43) Veröffentlichungstag der Anmeldung: 21.03.2001
(73) Patentinhaber: BOS GmbH & Co. KG, 73773 Aichwald (DE)
(72) Erfinder: Laudenbach, Thomas, 72108 Rottenburg (DE); Seel, Holger, 71134 Aidlingen (DE); Schlecht, Werner P., 71665 Vaihingen/Enz-Aurich (DE)
(74) Vertreter: Patentanwälte Ruff, Wilhelm, Beier, Dauster & Partner

(56) Entgegenhaltungen:
- DE-A- 3 505 143
- DE-A- 19 825 353
- DE-A- 19 847 787

## Beschreibung

Die Erfindung betrifft eine Schutzvorrichtung für einen Innenraum eines Kraftfahrzeugs mit einem in einer Schutzposition zumindest weitgehend flächig aufgespannten Schutzgebilde, das mittels einer Antriebsvorrichtung zwischen wenigstens zwei Positionen beweglich gelagert ist, wobei mit dem Schutzgebilde wenigstens ein Füh- rungselement verbunden ist, das mittels wenigstens eines Kupplungsgliedes mit Übertragungsmitteln der Antriebsvorrichtung mitführbar ist.

Eine der Erfindung zugrundeliegende Schutzvorrichtung kann sowohl als Laderaumabdeckung, die horizontal beweglich ist, als auch als Trennvorrichtung mit einem vertikal ausziehbaren Trennetz oder auch als Sonnenschutzrollo zum Abdunkeln wenigstens einer Scheibe des Kraftfahrzeugs gestaltet sein.

Eine Schutzvorrichtung in Form einer Laderaumabdeckung ist aus der DE 198 25 353 A1 bekannt. Die bekannte Laderaumabdeckung weist ein horizontal ausziehbares Abdeckrollo auf, das mittels einer elektrischen Antriebsvorrichtung zwischen einer den Laderaum freigebenden Ruheposition und einer den Laderaum abdeckenden Schutzposition beweglich gelagert ist. Das Abdeckrollo weist an seinem - in Ausziehrichtung - vorderen Stirnende eine Auszugstange auf, deren gegenüberliegende Stirnenden seitlich über das als Schutzgebilde dienende Abdeckrollo hinausragen. Diese Stirnenden bilden Führungselemente, die in jeweils einem U-förmigen, nach oben offenen Kupplungsglied gehalten sind. Jedes Kupplungsglied ist auf einem als Übertragungsmittel dienenden Zahnriemen befestigt, der sich in Ausziehrichtung, d.h. horizontal ausgerichtet, erstreckt. Jeder Zahnriemen ist mittels eines elektrischen Antriebsmotors betätigbar. Beide Antriebsmotoren sind aufeinander abgestimmt steuerbar, so daß ein paralleles Ausziehen oder Einfahren der Auszugstange und damit des Abdeckrollos erfolgt. Die als Führungselemente dienenden Stirnenden der Auszugstange können nach oben aus den Kupplungsgliedern herausgenommen werden. In gleicher Weise kann die Auszugstange von oben her wieder zwischen die Kupplungsglieder eingesetzt werden, wodurch das Abdeckrollo wieder mit der Antriebsvorrichtung verbunden werden kann.

Würde die Auszugstange bei einer Einfahr- oder Ausziehbewegung durch die Antriebsvorrichtung auf ein Hindernis treffen, so könnte eine Beschädigung der Antriebsvorrichtung und/oder der Auszugstange erfolgen. Um dies zu verhindern, wäre es möglich - was in der DE 198 25 353 A1 nicht offenbart ist -, die Belastung der Antriebsmotoren zu überwachen und bei einem Belastungsanstieg eine Umkehr der Antriebsrichtung durchzuführen. Derartige Vorrichtungen sind bei der automatischen Betätigung von Fensterscheiben für Kraftfahrzeuge grundsätzlich bekannt.

Aus der DE 35 05 143 A1 ist eine Vorrichtung zur Führung einer Gardine an einer Kraftfahrzeugscheibe bekannt, bei der die Gardine über mehrere Befestigungsklipse mit einem als Steuerelement dienenden Stahldraht verbunden ist. Ein vorderes Ende des Stahldrahtes ist in einem Bewegungsteil fixiert, das die Mitnahme der Gardine bei einer Bewegung des Stahldrahtes gewährleistet. Eine Überlastsicherung ist durch eine Rutschkupplung im Bereich des Antriebsmotors vorgesehen.

Aufgabe der Erfindung ist es, eine Schutzvorrichtung der eingangs genannten Art zu schaffen, die mit einfachen Mitteln auch bei Störfällen eine einwandfreie und sichere Bewegungsfunktion des Schutzgebildes gewährleistet.

Diese Aufgabe wird dadurch gelöst, dass das wenigstens eine Kupplungsglied zum Mitführen des wenigstens einen Führungselementes mit wenigstens einem Aufnahmeelement versehen ist, das eine begrenzte Kupplungskraft aufweist, bei deren Überschreitung das Führungselement von dem Aufnahmeelement gelöst wird.

Je nachdem, ob die Gegenkraft, die auf das Schutzgebilde und das wenigstens eine Führungselement wirkt, größer oder kleiner ist als die begrenzte Kupplungskraft des wenigstens einen Aufnahmeelementes wird das Führungselement aus einer stationären Position aufgenommen, aus einer bereits mit dem Kupplungsglied mitgenommenen Position freigegeben oder - bei Kräften geringer als die Kupplungskraft - mit dem Kupplungsglied für eine gemeinsame Bewegung mitgenommen. Die erfindungsgemäße Lösung eignet sich sowohl für Schutzgebilde, die lediglich ein einzelnes Führungselement aufweisen als auch für Schutzgebilde, die zwei oder mehr Führungselemente aufweisen. Je nach Ausgestaltung können lediglich ein einzelnes Kupplungsglied oder auch mehrere Kupplungsglieder vorgesehen sein. Die Antriebsvorrichtung kann eine einzelne Antriebseinheit oder mehrere Antriebseinheiten aufweisen. Die Antriebsvorrichtung weist vorzugsweise einen einzelnen, zentralen elektrischen Antrieb auf, der mittels einer Synchronisierung ein Schutzgebilde über zwei Führungselemente auf gegenüberliegenden Seiten parallel führt. Durch die erfindungsgemäße Lösung ist es gewährleistet, daß das entsprechende Schutzgebilde, sei es ein Trennetz, ein Abdeckrollo einer Laderaumabdeckung oder ein Sonnenschutzrollo, automatisch durch die Antriebsvorrichtung in die gewünschte Position überführt werden kann. Da bei Auftreten einer höheren Belastung als der der Antriebsvorrichtung das wenigstens eine Führungselement und damit das Schutzgebilde von der Antriebsvorrichtung abgekoppelt wird, kann keine Überlastung der Antriebsvorrichtung auftreten. Durch die kraftabhängige Aus- oder Einkopplung wird das wenigstens eine Führungselement beim Auftreffen des Schutzgebildes auf ein Hindernis automatisch und zwangsläufig von dem Kupplungsglied gelöst, während das Kupplungsglied durch die Antriebsvorrichtung weiterbewegt wird. Sobald das Kupplungsglied erneut die Position des Führungselementes - vorzugsweise in der anderen Richtung - überfährt, so wird das Führungselement automatisch wieder aufgenommen und mit der Bewegung des Kupplungsgliedes mitgenommen. Ein Auskoppeln kann in einfacher Weise auch dadurch erfolgen, daß das Schutzgebilde manuell in der Bewegungsrichtung oder entgegen der Bewegungsrichtung der Antriebsvorrichtung bewegt wird, wodurch eine Abkopplung des Schutzgebildes erfolgt. Das Kupplungsglied weist mittels seines wenigstens einen Aufnahmeelementes somit lediglich eine begrenzte Kupplungskraft in der jeweiligen Bewegungsrichtung des wenigstens einen Kupplungsgliedes auf. Sobald diese Kupplungskraft (Mitnahmekraft) überschritten wird, wird das Schutzgebilde von dem wenigstens einen Kupplungsglied gelöst. In gleicher Weise wird das Führungselement und damit das Schutzgebilde mit dem wenigstens einen Kupplungsglied wieder verbunden, sobald das Kupplungsglied die Position des Führungselementes bei einer entsprechend umgekehrten Bewegung wieder erreicht. Wesentlich ist daher, daß das Führungselement immer in der Bewegungsbahn des Kupplungsgliedes geführt ist. Auch nach dem Auskuppeln verbleibt das Führungselement in dieser Bewegungsbahn, so daß bei einem erneuten Zusammentreffen ein erneutes Zusammenkuppeln zwischen Kupplungsglied und Führungselement erfolgt. Durch entsprechende Überbelastung über die begrenzte Mitnahmekraft, d.h. Kupplungskraft, der Kupplung hinaus kann somit das wenigstens eine Führungselement und damit das Schutzgebilde von der Antriebsvorrichtung gelöst werden. Dadurch ist bei Stromausfall auch eine einfache Betätigung von Hand möglich, ohne daß anschließend - wie dies beim Stand der Technik der Fall ist - auch wieder ein manuelles Einhängen des wenigstens einen Führungselementes in das Kupplungsglied erfolgen muß. Das Wiederaufnehmen des wenigstens einen Führungselementes und damit des Schutzgebildes durch das wenigstens eine Kupplungsglied erfolgt bei der erfindungsgemäßen Lösung immer automatisch und damit zwangsläufig. Somit wird gegenüber dem Stand der Technik ein erheblich vergrößerter Bedienungskomfort geschaffen. Überbelastungen durch entsprechende, im Weg des Schutzgebildes befindliche Hindernisse werden vermieden. Das wenigstens eine Kupplungsglied kann in horizontalen, in vertikalen oder in schräg im Raum verlaufenden, fahrzeugfesten Führungen gelagert sein. Die Führungen können parallel oder nichtparallel zueinander ausgerichtet sein. Im nichtparallelen Fall sind Längenausgleichsmittel der Führungselemente und des zwischen den Führungen befindlichen Schutzgebildes vorgesehen. Das wenigstens eine Kupplungsglied ist in jedem Fall in gleicher Weise zwangsgeführt, wie dies das wenigstens eine Führungselement des Schutzgebildes ist, um aufgrund der gleichen Bewegungsbahn das jeweilige Führungselement immer wieder aufnehmen zu können. Zur Erzielung einer begrenzten Kupplungskraft für das wenigstens eine Aufnahmeelement kann das Aufnahmeelement mechanisch federbelastet beweglich sein. Es ist auch möglich, das Aufnahmeelement und das Führungselement des Schutzgebildes mit entsprechnenden Magnetelementen zu versehen. Auch andere kraft- oder formschlüssige Verbindungen mit entsprechender Kraftbegrenzung sind einsetzbar.

In Ausgestaltung der Erfindung ist jedes Kupplungsglied in einem fahrzeugfesten Führungsprofil linearbeweglich gelagert, dem auch das korrespondierende Führungselement zugeordnet ist. Dadurch wird gewährleistet, daß das Kupplungsglied das zeitweise vom Kupplungsglied getrennte Führungsprofil wieder auffinden kann, sobald es die Position des Führungselementes wieder überfährt.

In weiterer Ausgestaltung der Erfindung ist das wenigstens eine Aufnahmeelement des Kupplungsgliedes mechanisch wirksam und zwischen einer Halteposition und einer Freigabeposition quer zur Bewegungsrichtung des Kupplungsgliedes gegen die Kraft einer Rückstellfeder beweglich gelagert. Das wenigstens eine Aufnahmeelement bildet somit ein kraftabhängiges Rast- element, das aufgrund der mechanischen Funktion einfach und sicher gestaltet ist.

In weiterer Ausgestaltung der Erfindung sind zwei Kupplungsglieder auf gegenüberliegenden Seiten synchronisiert linearbeweglich angeordnet, die jeweils ein Führungselement des Schutzgebildes mitnehmen, freigeben oder aufnehmen.

Diese Ausgestaltung eignet sich insbesondere für den Einsatz der Schutzvorrichtung als Laderaumabdeckung, bei der die gegenüberliegenden Stirnenden eines Auszugprofiles, die als Führungselemente dienen, jeweils seitlich in entsprechend linearbeweglich geführten Kupplungsgliedern kraftbegrenzt gehalten sind.

In weiterer Ausgestaltung der Erfindung weist jedes Kupplungsglied zwei Aufnahmeelemente auf, die auf entgegengesetzte Bewegungsrichtungen des Kupplungsgliedes abgestimmt sind. Die beiden Aufnahmeelemente nehmen vorzugsweise das jeweilige Führungselement zwischen sich auf.

In weiterer Ausgestaltung der Erfindung ist das eine Aufnahmeelement bezüglich seiner Mitnahmekraft stärker ausgelegt als das andere Aufnahmeelement. Dies ist vorteilhaft, falls auf das Schutzgebilde in einer Bewegungsrichtung unabhängig von der Antriebsvorrichtung noch eine Zug- oder Druckkraft ausgeübt ist. Dies ist insbesondere der Fall bei Laderaumabdeckungen, bei denen das Abdeckrollo auf einer mit einer Rückholfeder belasteten Rollowelle gehalten ist. Dadurch wird bei manuellem Auszug gewährleistet, daß das Abdeckrollo wieder in seine Ruheposition zurückgezogen wird, sobald es entriegelt ist. Um zu verhindern, daß die entsprechende Zug- oder Druckkraft sich mit der Antriebskraft der Antriebsvorrichtung addiert und so unbeabsichtigt ein Lösen des wenigstens einen Führungselementes von dem Aufnahmeelement bewirkt, ist die beschriebene Ausgestaltung vorgesehen.

In weiterer Ausgestaltung der Erfindung ist dem wenigstens einen Führungselement wenigstens ein stationärer Anschlag zur Sicherung des Schutzgebildes in verschiedenen Positionen zugeordnet, des mittels des wenigstens einen Kupplungsgliedes in eine die Bewegung des Schutzgebildes zulassende Freigabeposition überführbar ist. Auch solche stationären, beweglichen Anschläge befinden sich somit in der Bewegungsbahn des wenigstens einen Kupplungsgliedes, so daß beim Überfahren der Anschläge durch das wenigstens eine Kupplungsglied diese zwangsläufig in die Freigabeposition überführt werden. Dadurch wird gewährleistet, daß das Schutzgebilde durch die Anschläge in der jeweiligen Position gehalten wird, solange es nicht durch das Kupplungsglied aufgenommen ist.

in weiterer Ausgestaltung der Erfindung sind die Anschläge als federbelastete, elastisch nachgiebige Sperrelemente gestaltet, die mit Anfahrschrägen für das jeweilige Kupplungsglied versehen sind. Dadurch ist ein einfaches Lösen der Anschläge erzielbar, sobald das Kupplungsglied die entsprechende Position des jeweiligen Anschlages überfährt. Vorzugsweise sind wenigstens für die beiden Endpositionen des Schutzgebildes, d.h. eine Ruheposition und eine vollständig ausgefahrene Schutzposition, entsprechende Anschläge vorgesehen. Grundsätzlich ist es jedoch auch möglich, lediglich einen einzelnen Anschlag für die ausgezogene Schutzposition vorzusehen, falls das Schutzgebilde in der Ruheposition durch eine entsprechende Rückholfeder gehalten ist.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung eine Ausführungsform einer erfindungsgemäßen Schutzvorrichtung in Form einer Laderaumabdeckung,
- Fig. 2: in schematischer Darstellung eine Draufsicht auf die Laderaumabdeckung nach Fig. 1,
- Fig. 3: ebenfalls in schematischer Darstellung eine Seitenansicht der Schutzvorrichtung nach den Fig. 1 und 2,
- Fig. 4: in vergrößerter, schematischer Darstellung einen Ausschnitt der Schutzvorrichtung nach Fig. 3 im Bereich eines Kupplungsgliedes,
- Fig. 5: in schematischer Darstellung ähnlich Fig. 3 eine weitere Ausführungsform einer erfindungsgemäßen Schutzvorrichtung ähnlich Fig. 3,
- Fig. 6: in vergrößerter, schematischer Darstellung einen Ausschnitt der Schutzvorrichtung nach Fig. 5 mit einem gegenüber der Fig. 4 geringfügig modifizierten Kupplungsglied,
- Fig. 7: in schematischer Seitenansicht eine weitere Ausführungsform einer erfindungsgemäßen Schutzvorrichtung ähnlich den Fig. 3 und 5,
- Fig. 8: in vergrößerter, schematischer Darstellung einen Ausschnitt der Schutzvorrichtung nach Fig. 7 im Bereich eines Kupplungsgliedes,
- Fig. 9 bis 11: in einer Draufsicht von oben schematisch einen Ausschnitt einer Schutzvorrichtung gemäß einem Ausführungsbeispiel der Fig. 1 bis 8 im Bereich eines mit zwei Aufnahmeelementen versehenen Kupplungsgliedes in unterschiedlichen Momentanpositionen,
- Fig. 12: in perspektivischer Darstellung eine weitere Ausführungsform einer erfindungsgemäßen Schutzvorrichtung, bei der die Kupplungsglieder für ein Anheben oder Absenken des Schutzgebildes in seitlichen Rahmenprofilen einer Heckklappe eines Kombi-Personenkraftwagens integriert sind.

Die erfindungsgemäße Lösung wird nachfolgend anhand verschiedener Ausführungsformen einer Schutzvorrichtung in Form einer Laderaumabdeckung für einen Kombi-Personenkraftwagen beschrieben. Die erfindungsgemäße Lösung ist jedoch nicht auf die beschriebenen Ausführungsbeispiele beschränkt, sondern erstreckt sich auch auf andere Arten erfindungsgemäßer Schutzvorrichtungen, insbesondere Trennvorrichtungen zwischen Laderaum und Fahrgastraum in einem Kombi-Personenkraftwagen und Sonnenschutzrollos für Fahrzeugscheiben.

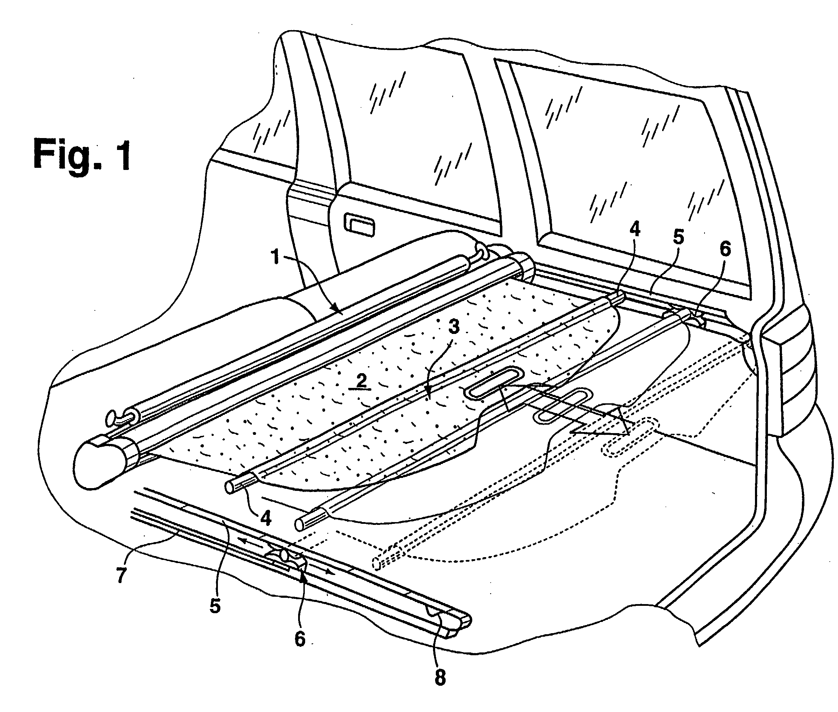

Die erfindungsgemäße Laderaumabdeckung 1 gemäß den Fig. 1 bis 3 weist ein Schutzgebilde in Form einer Abdeckplane 2 auf, die auf einer in einem Kassettengehäuse gelagerten Rollowelle gehalten ist. Das Kassettengehäuse ist in grundsätzlich bekannter Weise laderaumfest positioniert. An ihrem in Auszugsrichtung vorderen Stirnende ist die Abdeckplane 2 mit einem als Konturteil gestalteten Auszugteil 3 versehen, das eine sich quer über die gesamte Breite der Abdeckplane 2 erstrekkende Auszugstange aufweist. Die Auszugstange ragt mit ihren gegenüberliegenden Stirnenden seitlich über die Abdeckplane 2 hinaus und bildet mit diesen Stirnenden jeweils ein Führungselement 4, die in horizontalen, fahrzeugfest positionierten Führungsprofilen 5 horizontal verschiebbar gelagert sind.

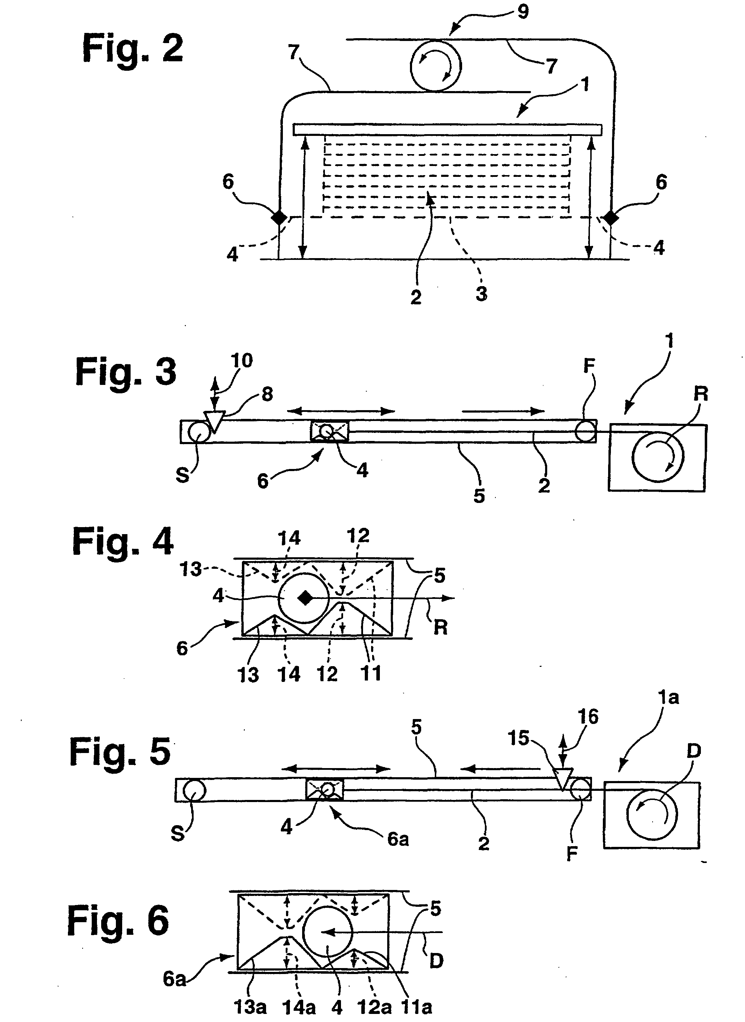

In jedem Führungsprofil 5 ist jeweils ein als Kupplungsglied dienender Mitnehmerschlitten 6 linear beweglich gelagert, dessen Bewegungsbahn auf die Führungsbahn des zugehörigen, in das Führungsprofil 5 hineinragenden Führungselementes 4 der Abdeckplane 2 abgestimmt ist. Die beiden Mitnehmerschlitten 6 in jedem Führungsprofil 5 sind mittels einer Antriebsvorrichtung 7, 9 synchron zueinander in dem jeweiligen Führungsprofil 5 beweglich. Die Antriebsvorrichtung 7, 9 weist beim schematisch dargestellten Ausführungsbeispiel gemäß Fig. 2 eine zentrale, elektrische Antriebseinheit auf. Als Übertragungsmittel 7 zu den Mitnehmerschlitten 6 hin dienen biegeelastische, zug- und drucksteife Zahnstangen. In gleicher Weise können entsprechende Bowdenzüge, Gewindewellen, Seil- oder Riementriebe oder anders gestaltete Übertragungsmittel vorgesehen sein. Die Antriebsvorrichtung kann auch zwei getrennte elektrische Antriebsmotoren für beide Seiten der Laderaumabdeckung aufweisen, die mittels einer elektronischen Steuerung bewegungssynchronisiert sind. Jeder Mitnehmerschlitten 6 ist an dem zugehörigen Übertragungsmittel 7 festgelegt, so daß eine Bewegung des entsprechenden Übertragungsmittels 7 auch eine zwangsläufige Bewegung des entsprechenden Mitnehmerschlitten 6 nach sich zieht.

Jeder Mitnehmerschlitten 6 weist zwei Aufnahmeelemente oder -elementenpaare 11, 13 auf, die in der jeweiligen Bewegungsrichtung des Mitnehmerschlittens 6 ein Ein- oder Auskuppeln des jeweiligen Führungselementes 4 der Abdeckplane 2 bewirken. Dabei ist jeder Mitnehmerschlitten 6 in beiden Bewegungsrichtungen derart relativ zu dem Führungselement 4 hin offen gestaltet, daß das jeweilige Führungselement 4 zwischen die Aufnahmeelemente 11, 13 bei der jeweiligen Bewegungsrichtung des Mitnehmerschlittens 6 zwangsläufig eintauchen kann. Die Aufnahmeelemente 11, 13 sind in einer besonders einfachen, in Fig. 4 lediglich schematisch dargestellten Ausführungsform als federelastisch nach oben gewölbte Zungen gestaltet, die als zum Mitnehmerschlitten 6 getrennte Bauteile oder auch als einstückig angeformte Kunststoffteile ausgeführt sein können. Die zungenförmigen Aufnahmeelemente 11, 13 sind quer zur Bewegungsrichtung - beim dargestellten Ausführungsbeispiel in vertikaler Richtung - elastisch nachgiebig, wobei die gewölbte Position die unbelastete Ruheposition darstellt, in der die Federelastizität der zungenförmigen Aufnahmeelemente 11 entsprechende Federkräfte 12, 14 definiert.

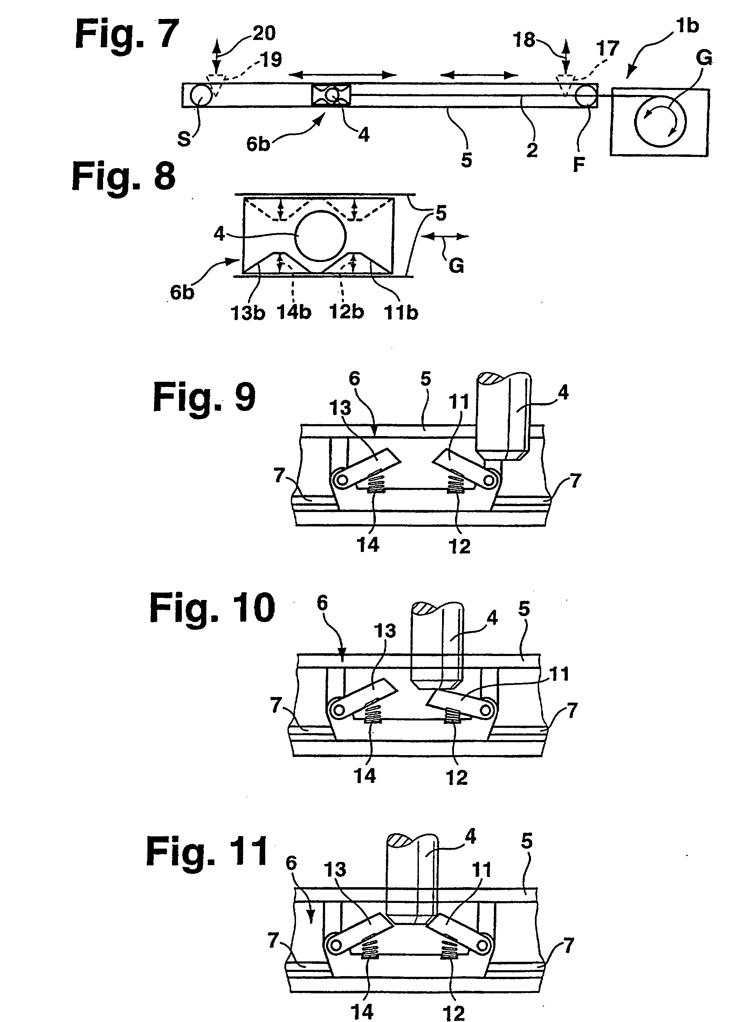

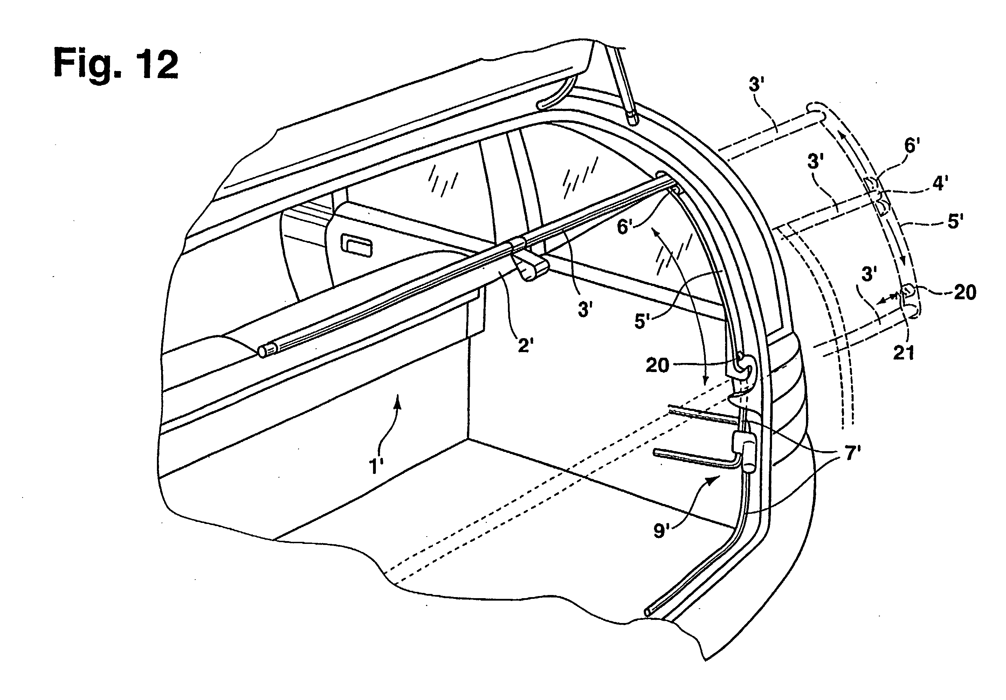

Das Ausführungsbeispiel gemäß den Fig. 9 bis 11 ist zu den anhand der Fig. 1 bis 4 beschriebenen Ausführungsbeispielen funktionsgleich, so daß auch für entsprechend funktionsgleiche Teile die gleichen Bezugszeichen verwendet wurden. Wesentlicher Unterschied zu dem Ausführungsbeispiel in den Fig. 9 bis 11 ist es, daß die Aufnahmeelemente 11, 13 nicht direkt elastisch nachgiebig sind, sondern diese elastische Nachgiebigkeit durch separate Federelemente 12, 14 erzielt wird. Die Aufnahmeelemente 11 sind hebelartig gestaltet und derart gegenläufig schräg ausgerichtet, daß die Stirnbereiche der Aufnahmeelemente 11, 13 in die Bewegungsbahn des Führungselementes 4 hineinragen. Das Stirnende jedes Führungselementes 4 ist konisch abgeschrägt. Entsprechend abgestimmt sind auch die Stirnenden der Aufnahmeelemente 11, 13 abgeschrägt, so daß sich zwischen dem Führungselement 4 und den Aufnahmeelementen 11, 13 Anlaufschrägen ergeben, die eine kraftbegrenzte Sicherung des Führungselementes 4 zwischen den beiden Aufnahmeelementen 11, 13 ermöglichen. Bei einer über die definierte Rückhaltekraft, d.h. Kupplungs- oder Mitnahmekraft, der Aufnahmeelemente 11, 13 hinausgehenden Kraft in einer der beiden horizontalen Bewegungsrichtungen des Führungselementes 4 gleitet das Führungselement 4 wieder über das jeweilige Aufnahmeelement 11, 13 hinaus und ist dadurch gegenüber den Aufnahmeelementen 11, 13 frei. In den Fig. 9 bis 11 sind verschiedene Momentanpositionen dargestellt, bei denen der Mitnehmerschlitten 6 in der Zeichenebene nach rechts durch das entsprechende Übertragungsmittel 7 bewegt wird, bis das Führungselement 4 zwischen den beiden Aufnahmeelementen 11, 13 gefangen ist. Nun kann das Führungselement 4 und damit das Auszugteil 3 einschließlich der Abdeckplane 2 mittels der Antriebsvorrichtung 9 in die gewünschte Richtung bewegt werden. Sobald an dem Auszugteil 3 und damit an jedem Führungselement 4 in Auszug- oder Einfahrrichtung eine zusätzliche Kraft angreift, die über die Rückhaltekraft der Aufnahmeelemente 11, 13 und der zugehörigen Federelemente 12, 14 hinausgeht, so überdrückt jedes Führungselement 4 in der entsprechenden Bewegungsrichtung das korrespondierende Aufnahmeelement 11, 13, wodurch in entsprechend umgekehrter Richtung in der Folge der Fig. 11, 10 und 9 das Führungselement 4 vom Mitnehmerschlitten 6 wieder gelöst wird. Bei einem erneuten Vorbeifahren des Mitnehmerschlittens 6 in der gleichen oder in der umgekehrten Bewegungsrichtung an der Position des Führungselementes 4 wird dieses wieder auf- und mitgenommen, falls nicht erneut eine größere Gegenkraft vorhanden ist.

Beim Ausführungsbeispiel nach den Fig. 1 bis 4 sind die Federkräfte 12, 14 der Aufnahmeelemente 11, 13 unterschiedlich gestaltet, um eine permanente Rückstellkraft R aufgrund einer der Rollowelle zugeordneten Rückholfeder auf die Abdeckplane 2 auszugleichen. Die Rückhaltekraft des Federelementes 12 und damit des Aufnahmeelementes 11 ist daher beim Ausführungsbeispiel nach den Fig. 3 und 4 um den Betrag der zusätzlichen Rückstellkraft R größer als die Rückhaltekraft des Federelementes 14 des anderen Aufnahmeelementes 13. Entsprechend umgekehrt ist die Ausgestaltung nach den Fig. 5 und 6. Hier wirkt auf das Schutzgebilde 2 eine Druckkraft D in zur Rückholkraft R gemäß Fig. 3 umgekehrter Drehrichtung. Entsprechend ist auch das Aufnahmeelement 13a mit einer um den Betrag der Druckkraft D größeren Rückhaltekraft eines Federelementes 14a versehen, als dies das Aufnahmeelement 11a aufweist. Bei dem Mitnehmerschlitten 6b nach den Fig. 7 und 8 wirken gleich große Zug- und Druckkräfte G in den entgegengesetzten Bewegungsrichtungen, so daß die beiden Aufnahmeelemente 11b und 13b mit identischen Rückhaltekräften und demzufolge identischen Federelementen 12b, 14b versehen sind. Die anhand der Fig. 3 bis 8 beschriebenen, unterschiedlichen Ausführungen können in gleicher Weise beim Ausführungsbeispiel nach den Fig. 9 bis 11 eingesetzt werden, indem jeweils die Rückstellfedern 12, 14 gleich oder unterschiedlich ausgelegt sind.

Bei den Ausführungsbeispielen nach den Fig. 3, 5 und 7 ist die eingezogene Freigabeposition durch das Bezugszeichen F und die ausgezogene Schutzposition des Schutzgebildes 2 durch das Bezugszeichen S definiert. Wenigstens einer Endposition ist bei allen diesen Ausführungsbeispielen ein durch eine Federanordnung 10, 16, 18, 20 belasteter, stationärer, jedoch quer zur Bewegungsrichtung des jeweiligen Mitnehmerschlittens 6 elastisch beweglicher Anschlag 8, 15, 17, 19 zugeordnet. Der jeweilige Anschlag 8, 15, 17, 19 ist derart in der Bewegungsbahn des jeweiligen Mitnehmerschlittens 6 angeordnet, daß er von dem Mitnehmerschlitten 6, 6a, 6b aus seiner Sperrposition in eine Freigabeposition überführt werden kann. Dazu weist jeder Anschlag 8, 15, 17, 19 in geeigneter Weise wenigstens eine Anfahrschräge auf, die zwangsläufig beim Anfahren des Kupplungsgliedes und damit des Mitnehmerschlittens 6, 6a, 6b gegen den Anschlag 8 ein Zurückweichen des Anschlages 8, 15, 17, 19 gegen die entsprechende Rückstellkraft der zugehörigen Federanordnung 10, 16, 18, 20 bewirkt. Sobald das Kupplungsglied, d.h. der Mitnehmerschlitten 6, 6a, 6b sich von dem jeweiligen Anschlag 8, 15, 17, 19 wieder entfernt, wird dieser durch die entsprechende Federanordnung 10, 16, 18, 20 zwangsläufig wieder in seine Sperrposition zurückgeführt. Dadurch ist es möglich, daß der Mitnehmerschlitten 6, 6a, 6b ein entsprechendes Führungselement 4 und damit die Abdeckplane 2 auch aus einer durch einen entsprechenden Anschlag arretierten Sperrposition herausholen kann.

Die Laderaumabdeckung 1' gemäß Fig. 12 unterscheidet sich insofern von der Laderaumabdeckung nach Fig. 1, als hier die Antriebsvorrichtung 9' zur Bewegung des Auszugteiles 3' und damit der Abdeckplane 2' in der ausgezogenen Schutzposition schräg nach oben in eine Komfortstellung vorgesehen ist. Das grundsätzliche Überführen einer Laderaumabdeckung in eine solche Komfortstellung ist aus der WO 98/24657 bekannt, auf die hiermit ergänzend verwiesen wird. Beim dargestellten Ausführungsbeispiel ist die Abdeckplane 2' zunächst aus ihrem Kassettengehäuse von Hand in die horizontale Abdeckposition überführbar und im Bereich des Heckrahmens der Heckklappe manuell dort verankerbar. Die Überführung in eine Komfortstellung schräg nach oben, in der ein vergrößerter Zugang zu dem unter der Abdeckplane 2' befindlichen Laderaum vorhanden ist, erfolgt in Abhängigkeit vom Öffnen oder Schließen der Heckklappe mittels der Antriebsvorrichtung 9', die hierzu in geeigneter Weise mittels entsprechender elektrischer oder elektronischer Steuerungen an die Heckklappenbewegung angekoppelt ist. In den gegenüberliegenden Seiten des Heckrahmens ist jeweils ein Führungsprofil 5' integriert, in dem jeweils ein als Kupplungsglied dienender Mitnehmerschlitten 6' mittels der Übertragungsmittel 7' verfahrbar gelagert ist. In dem jeweiligen Führungsprofil 5' ist auch jeweils ein Stirnende 4' des Auszugteiles 3' als Führungselement verschiebbar gelagert. Der unteren, horizontalen Schutzposition der Abdeckplane 2' ist ein mittels eines Federelementes 21 federbelasteter Anschlag 20 zugeordnet, der von dem Mitnehmerschlitten 6' überfahrbar ist. Im übrigen entspricht die Ausgestaltung und Funktion der Mitnehmerschlitten 6' und der gesamten Schutzvorrichtung den zuvor beschriebenen Ausführungsbeispielen, so daß an dieser Stelle keine nähere Erläuterung mehr notwendig ist.

Wenn nun die Abdeckplane 2' mit ihrem Auszugteil 3' in der horizontalen Schutzposition im unteren Bereich des Führungsprofiles 5' bei geschlossener Heckklappe eingehängt ist, so nimmt mit dem Öffnen der Heckklappe aufgrund einer entsprechenden Steuerung der Antriebsvorrichtung 9' jeder Mitnehmerschlitten 6' das Auszugteil 3' auf beiden Seiten nach oben mit, wodurch die Abdeckplane 2' bei geöffneter Heckklappe in eine schräg nach oben gestellte Komfortposition überführt wird, in der eine große Zugangsöffnung für den Laderaum unterhalb der Abdeckplane 2' zur Verfügung steht. Bei einem erneuten Schließen der Heckklappe wird die Antriebsvorrichtung 9' entsprechend umgekehrt angesteuert, wodurch die beiden Mitnehmerschlitten 6' auf den gegenüberliegenden Seiten wieder nach unten bis über den jeweiligen Anschlag 20 hinausgefahren werden. Ein Entnehmen in dieser Schutzposition des Auszugteiles 3' von Hand ist in einfacher Weise möglich, da das Führungsprofil 5' auf jeder Seite in diesem Bereich korrespondierend gekrümmt gestaltet ist. Falls ein Entnehmen relativ zum Mitnehmerschlitten 6' nach oben nicht möglich ist, so wird das Auszugteil 3' in einfacher Weise in der oberen Position jedes Mitnehmerschlittens 6' manuell durch eine entsprechende Zugbewegung nach unten von dem jeweiligen Mitnehmerschlitten 6' gelöst und in die untere Schutzposition eingehängt oder auch in die eingezogene Ruhesposition zurückgeführt.

## Patentansprüche

1. Schutzvorrichtung für einen Innenraum eines Kraftfahrzeugs mit einem in einer Schutzposition zumindest weitgehend flächig aufgespannten Schutzgebilde (2), das mittels einer Antriebsvorrichtung (7, 9) zwischen wenigstens zwei Positionen beweglich gelagert ist, wobei mit dem Schutzgebilde (2) wenigstens ein Führungselement (4) verbunden ist, das mittels wenigstens eines Kupplungsgliedes (6, 6a, 6b, 6') mit Übertragungsmitteln (7) der Antriebsvorrichtung mitführbar ist,
**dadurch gekennzeichnet, dass**
das wenigstens eine Kupplungsglied (6, 6°, 6b 6') zum Mitführen des wenigstens einen Führungselementes (4) mit wenigstens einem Aufnahmeelement (11, 13; 11a, 13a; 11b, 13b) versehen ist, das eine begrenzte Kupplungskraft aufweist, bei deren Überschreitung das Führungselement (4) von dem Aufnahmeelement gelöst wird.

2. Schutzvorrichtung nach Anspruch 1, **dadurch gekennzeichnet, daß** jedes Kupplungsglied (6, 6a, 6b, 6') in einem fahrzeugfesten Führungsprofil (5, 5') linearbeweglich gelagert ist, dem auch das korrespondierende Führungselement (4, 4') zugeordnet ist.

3. Schutzvorrichtung nach Anspruch 1 oder 2, **dadurch gekennzeichnet, daß** das wenigstens eine Aufnahmeelement (11, 13; 11a, 13a; 11b, 13b) des Kupplungsgliedes (6, 6a, 6b) mechanisch wirksam ist und zwischen einer Halteposition und einer Freigabeposition quer zur Bewegungsrichtung des Kupplungsgliedes (6, 6a, 6b) gegen die Kraft einer Rückstellfeder (12, 14; 12a, 14a; 12b, 14b) beweglich gelagert ist.

4. Schutzvorrichtung nach Anspruch 1 oder 2, **dadurch gekennzeichnet, daß** zwei Kupplungsglieder (6, 6') auf gegenüberliegenden Seiten synchronisiert linearbeweglich angeordnet sind, die jeweils ein Führungselement (4, 4') des Schutzgebildes (2, 2') mitnehmen, freigeben oder aufnehmen.

5. Schutzvorrichtung nach einem der vorhergehenden Ansprüche, **dadurch gekennzeichnet, daß** jedes Kupplungsglied (6, 6a, 6b) zwei Aufnahmeelemente (11, 13; 11a, 13a; 11b, 13b) aufweist, die auf entgegengesetzte Bewegungsrichtungen des Kupplungsgliedes (6, 6a, 6b) abgestimmt sind.

6. Schutzvorrichtung nach Anspruch 5, **dadurch gekennzeichnet, daß** das eine Aufnahmeelement (13, 11a) bezüglich seiner Mitnahmekraft stärker ausgelegt ist als das andere Aufnahmeelement (11, 13a).

7. Schutzvorrichtung nach einem der vorhergehenden Ansprüche, **dadurch gekennzeichnet, daß** dem wenigstens einen Führungselement (4, 4') wenigstens ein stationärer Anschlag (8, 15, 17, 19, 20) zur Sicherung des Schutzgebildes (2, 2') in verschiedenen Positionen zugeordnet ist, der mittels des wenigstens einen Kupplungsgliedes (6, 6a, 6b, 6') in eine die Bewegung des Schutzgebildes zulassende Freigabeposition überführbar ist.

8. Schutzvorrichtung nach Anspruch 7, **dadurch gekennzeichnet, daß** die Anschläge als federbelastete, elastisch nachgiebige Sperrelemente gestaltet sind, die mit Anfahrschrägen für das jeweilige Kupplungsglied (6, 6a, 6b, 6') versehen sind.

## Claims

1. Protection device for an interior space of a motor vehicle, comprising a protective structure (2) which in a protection position is spread out in an at least substantially planar shape and which is mounted to be movable between at least two positions by means of a drive device (7, 9), there being connected to the protective structure (2) at least one guide element (4) which, by means of at least one coupling member (6, 6a, 6b, 6'), can be entrained by transmission means (7) of the drive device,
**characterised in that**
at least one coupling member (6, 6°, 6b, 6') for entraining the at least one guide element (4) is provided with at least one receiving element (11, 13; 11a, 13a; 11b, 13b) which has a limited coupling force, the guide element (4) being released from the receiving element when the coupling force thereof is exceeded.

2. Protection device according to claim 1, **characterised in that** each coupling member (6, 6a, 6b, 6') is mounted to be linearly movable in a sectional guide member (5, 5') fixed to the vehicle, with which sectional guide member (5, 5') also the corresponding guide element (4, 4') is associated.

3. Protection device according to claim 1 or 2, **characterised in that** at least one receiving element (11, 13; 11a, 13a; 11b, 13b) of the coupling member (6, 6a, 6b) is mechanically active and is mounted to be movable between a retaining position and a release position transversely to the direction of movement of the coupling member (6, 6a, 6b) against the force of a restoring spring (12, 14; 12a, 14a; 12b, 14b).

4. Protection device according to claim 1 or 2, **characterised in that** two coupling members (6, 6') are arranged on opposite sides for synchronous linear movement, each of which coupling members (6, 6') entrains, releases or receives a guide element (4, 4') of the protective structure (2, 2').

5. Protection device according to any one of the preceding claims, **characterised in that** each coupling member (6, 6a, 6b) has two receiving elements (11, 13; 11a, 13a; 11b, 13b) which are adapted to opposite directions of movement of the coupling member (6, 6a, 6b).

6. Protection device according to claim 5, **characterised in that** one receiving element (13, 11a) is stronger with regard to its entraining force than the other receiving element (11, 13a).

7. Protection device according to any one of the preceding claims, **characterised in that** at least one stationary stop (8, 15, 17, 19, 20) for securing the protective structure (2, 2') in various positions is associated with the at least one guide element (4, 4'), which stationary stop (8, 15, 17, 19, 20) can be transferred by means of the at least one coupling member (6, 6a, 6b, 6') into a release position permitting movement of the protective structure.

8. Protection device according to claim 7, **characterised in that** the stops are in the form of spring-loaded, resiliently yielding blocking elements provided with inclined faces against which the respective coupling member (6, 6a, 6b, 6') drives.

## Revendications

1. Dispositif de protection pour un espace intérieur d'un véhicule, avec une structure de protection (2) tendue au moins pour l'essentiel à plat dans une position de protection, structure qui, au moyen d'un dispositif d'entraînement (7, 9), est montée à déplacement entre au moins deux positions, au moins un élément de guidage (4) étant relié à la structure de protection (2), élément qui, par l'intermédiaire d'au moins un organe d'accouplement (6, 6a, 6b, 6'), peut être conjointement entraîné par des moyens de transmission (7) du dispositif d'entraînement,
**caractérisé en ce que** ledit au moins un organe d'accouplement (6, 6a, 6b, 6') pour l'entraînement conjoint dudit au moins un élément de guidage (4) est pourvu d'au moins un élément récepteur (11, 13 ; 11a, 13a; 11b, 13b) qui présente une force d'accouplement limitée, lors du dépassement de laquelle l'élément de guidage (4) est libéré de l'élément récepteur.

2. Dispositif de protection selon la revendication 1, **caractérisé en ce que** chaque organe d'accouplement (6, 6a, 6b, 6') est monté à déplacement linéaire dans un profilé de guidage (5, 5') solidaire du véhicule, auquel est également associé l'élément de guidage (4, 4') correspondant.

3. Dispositif de protection selon la revendication 1 ou 2, **caractérisé en ce que** ledit au moins un élément récepteur (11, 13 ; 11a, 13a ; 11b, 13b) de l'organe d'accouplement (6, 6a, 6b) est à action mécanique, et est monté à déplacement entre une position de maintien et une position de libération transversalement à la direction de déplacement de l'organe d'accouplement (6, 6a, 6b) et contre la force d'un ressort de rappel (12, 14; 12a, 14a ; 12b, 14b).

4. Dispositif de protection selon la revendication 1 ou 2, **caractérisé en ce que** deux organes d'accouplement (6, 6') sont disposés sur des côtés opposés, à déplacement linéaire synchronisé, et ils entraînent, libèrent ou reçoivent chacun un élément de guidage (4, 4') de la structure de protection (2, 2').

5. Dispositif de protection selon l'une des revendications précédentes, **caractérisé en ce que** chaque organe d'accouplement (6, 6a, 6b) présente deux éléments récepteurs (11, 13 ; 11a, 13a ; 11b, 13b), qui sont adaptés à des directions opposées de déplacement de l'organe d'accouplement (6, 6a, 6b).

6. Dispositif de protection selon la revendication 5, **caractérisé en ce que** l'un (13, 11a) des éléments récepteurs est conçu avec une force d'entraînement plus puissante que l'autre élément récepteur (11, 13a).

7. Dispositif de protection selon l'une des revendications précédentes, **caractérisé en ce qu'**au moins une butée fixe (8, 15, 17, 19, 20) est associée audit au moins un élément de guidage (4, 4') pour bloquer la structure de protection (2, 2') dans différentes positions, butée qui, au moyen dudit au moins un organe d'accouplement (6, 6a, 6b, 6'), peut être transférée dans une position de libération autorisant le déplacement de la structure de protection.

8. Dispositif de protection selon la revendication 7, **caractérisé en ce que** les butées sont réalisées sous la forme d'éléments de verrouillage élastiquement flexibles, sollicités par ressort, qui sont pourvus de biais d'attaque pour l'organe d'accouplement respectif (6, 6a, 6b, 6').
